(19) **Europäisches Patentamt**
**European Patent Office**
**Office européen des brevets**

(11) **EP 2 368 297 B1**

(12) **FASCICULE DE BREVET EUROPEEN**

(45) Date de publication et mention de la délivrance du brevet:
**27.03.2013 Bulletin 2013/13**

(21) Numéro de dépôt: **09805768.0**

(22) Date de dépôt: **21.12.2009**

(51) Int Cl.:
*H01S 3/00* (2006.01)     *H01S 3/09* (2006.01)
*H01S 3/16* (2006.01)

(86) Numéro de dépôt international:
**PCT/FR2009/052642**

(87) Numéro de publication internationale:
**WO 2010/072964 (01.07.2010 Gazette 2010/26)**

(54) **DISPOSITIF DE REDUCTION DES DISTORSIONS TEMPORELLES INDUITES DANS DES IMPULSIONS LUMINEUSES PAR UN SYSTEME CONVERTISSEUR NON-LINEAIRE DE FREQUENCES OPTIQUES**

EINRICHTUNG ZUR VERRINGERUNG DER IN LICHTIMPULSEN DURCH EIN NICHTLINEARES OPTISCHES FREQUENZUMSETZERSYSTEM ERZEUGTEN ZEITVERZERRUNG

DEVICE FOR REDUCING TIME DISTORTION GENERATED IN LIGHT PULSES BY A NONLINEAR OPTICAL FREQUENCY CONVERTER SYSTEM

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **22.12.2008 FR 0858954**

(43) Date de publication de la demande:
**28.09.2011 Bulletin 2011/39**

(73) Titulaire: **COMMISSARIAT A L'ENERGIE ATOMIQUE ET AUX ENERGIES ALTERNATIVES 75015 Paris (FR)**

(72) Inventeurs:
• **HOCQUET, Steve**
  **F-33400 Talence (FR)**
• **PENNINCKX, Denis**
  **F-33610 Cestas (FR)**
• **GOUEDARD, Claude**
  **F-91400 Orsay (FR)**

(74) Mandataire: **Chauvin, Vincent et al Cabinet Harle et Phelip 14/16 rue Ballu 75009 Paris (FR)**

(56) Documents cités:
**EP-A- 0 869 675       EP-A- 1 662 655
WO-A-2007/112769       GB-A- 2 369 735
US-A1- 2003 179 828**

• **S. HOCQUET ET AL: "FM-to-AM conversion in high-power lasers" APPLIED OPTICS, OSA, OPTICAL SOCIETY OF AMERICA, WASHINGTON, DC, vol. 47, no. 18, 20 juin 2008 (2008-06-20) , pages 3338-3349, XP001514400 ISSN: 0003-6935 cité dans la demande**
• **DENIS PENNINCKX ET AL: "Signal Propagation Over Polarization-Maintaining Fibers: Problem and Solutions" JOURNAL OF LIGHTWAVE TECHNOLOGY, IEEE SERVICE CENTER, NEW YORK, NY, US, vol. 24, no. 11, 1 novembre 2006 (2006-11-01), pages 4197-4207, XP011150141 ISSN: 0733-8724**

Remarques:
Le dossier contient des informations techniques présentées postérieurement au dépôt de la demande et ne figurant pas dans le présent fascicule.

**Description**

La présente invention concerne les lasers impulsionnels convertis en fréquence.

Plus particulièrement, l'invention concerne un dispositif de réduction des distorsions temporelles induites dans des impulsions de forte puissance (par exemple le Laser Megajoule ou LMJ) ou de très courte durée (picoseconde ou sub picoseconde) par un système convertisseur optique de fréquence. Ces distorsions proviennent notamment de conversion FM-AM.

Les lasers émettent à des longueurs d'onde bien définies, fonction du milieu laser utilisé. Pour obtenir des impulsions laser à une autre fréquence optique que la source, on utilise assez couramment l'interaction d'un faisceau lumineux intense avec un matériau optique non linéaire ayant une susceptibilité optique non linéaire $\chi$ d'ordre 2 ou 3 pour obtenir, par conversion de fréquence optique, un faisceau de sortie de fréquence différente du faisceau incident. La conversion de fréquence est un processus non-linéaire permettant de convertir une onde lumineuse de fréquence $\omega$ en une onde de fréquence multiple, typiquement $2\omega$, $3\omega$ ou $4\omega$. Pour une intensité faible, l'onde en sortie du convertisseur reste sinusoïdale et aucune nouvelle fréquence n'est créée. A plus forte intensité l'onde en sortie comprend aussi des fréquences harmoniques $2\omega$, $3\omega$ etc. En général les premières harmoniques sont les plus fortes mais il se peut que certaines harmoniques disparaissent sous condition de symétrie du matériau à petite échelle. En général ces nouvelles fréquences restent à des niveaux très faibles car les ondes réémises en différents points de l'espace ne sont pas en phase et s'annihilent les unes les autres. Pour que le processus soit constructif, il faut qu'il y ait « accord de phase », c'est-à-dire que les ondes doivent avoir des vitesses de phase identiques. Cette méthode permet de convertir une fréquence $\omega$ en une de ses harmoniques.

Un premier type de conversion de fréquence est le doublage de fréquence (ou génération de seconde harmonique, SHG), qui permet à partir d'un faisceau laser à une longueur d'onde initiale d'obtenir des impulsions lasers à une longueur d'onde moitié de cette longueur d'onde initiale : à partir d'un faisceau infrarouge, on peut ainsi générer des impulsions dans le domaine visible ou le proche UV. Un second type de conversion de fréquence est la somme de fréquence (ou génération de la fréquence somme ou SFG pour sum frequency génération), qui permet à partir de deux faisceaux à des fréquences différentes d'obtenir un faisceau dont la fréquence est la somme des fréquences des faisceaux incidents. Ainsi, comme par exemple pour le LMJ, on peut obtenir des impulsions $3\omega$ (ou 351 nm) à partir d'un mélange d'ondes de fréquences respectives $2\omega$ (526 nm) et $\omega$ (1053 nm).

La combinaison de différents types de conversion de fréquence permet ainsi d'obtenir des impulsions lasers à des longueurs d'onde qui ne peuvent pas être générées directement.

L'accord de phase n'existe que pour certains cristaux, à certaines fréquences $\omega$ et pour certains angles d'incidence. Il n'est d'ailleurs parfait qu'à une seule fréquence w : autour, l'efficacité de la conversion de fréquence diminue selon une loi en sinus cardinal (ou sinc, avec $sinc(x) = (sin(x))/x$) lorsque l'intensité est modérée. Ainsi, si l'on souhaite convertir un signal, son spectre doit être plus étroit que l'acceptance spectrale du processus de conversion. On entend par acceptance spectrale de conversion, la plage spectrale maximale susceptible d'être convertie, généralement définie par les fréquences pour lesquelles le taux de conversion est supérieur à 50% ou 80% du maximum de ce taux. De plus, l'acceptance spectrale du processus de conversion varie en fonction de l'intensité du signal. Ainsi, si le signal à convertir présente des variations d'intensité - ce qui est le cas le plus fréquent - l'acceptance spectrale évolue au cours de l'impulsion : la fonction de transfert de la conversion de fréquence est fortement non-linéaire.

Un matériau optique non linéaire ne permet donc la conversion de fréquence que dans des conditions très particulières pour des impulsions laser à une fréquence initiale précise et d'intensité suffisante. La fonction de transfert de conversion de fréquence d'un matériau optique non linéaire a une acceptance spectrale limitée.

Un cristal non linéaire doit être judicieusement choisi pour :

- permettre de réaliser l'accord de phase ;
- être transparent aux fréquences de travail ;
- résister aux flux lumineux qu'il va subir ;
- ses dimensions ;
- son ouverture angulaire ;
- sa tolérance aux variations de température, en particulier celles dues à son propre échauffement ;
- son acceptance spectrale qui doit permettre de faire passer tout le spectre des impulsions à convertir.

Ainsi il n'existe pas de cristal idéal et le choix dépend de l'application. L'acceptance spectrale peut donc au final être un facteur limitant dans la conversion de fréquence. Par exemple, on utilise du KTP (cristal de phosphate de titanyle de potassium) pour le doublement de fréquence de certains lasers afin de profiter de sa tolérance angulaire importante mais l'acceptance spectrale est alors faible. Ainsi, on ne peut pas convertir des signaux dont le spectre est trop large, c'est-à-dire plus large que l'acceptance spectrale. En effet, le signal subit alors de très fortes distorsions au cours du temps qui sont plus importantes que les simples distorsions liées au processus de conversion de fréquence pour un signal dont le spectre serait bien plus étroit que l'acceptance spectrale de la conversion de fréquence.

Dans des lasers à impulsions de très forte puissance, les impulsions sont relativement longues (durée de l'ordre de la nanoseconde). Une partie de l'énergie de l'impulsion convertie en fréquence subit une conversion parasite FM-AM qui introduit des distorsions en amplitude et/ou en phase dans le signal laser. Ce phénomène de conversion FM-AM est lui-même un effet non linéaire en fonction de l'intensité du faisceau incident.

La conversion FM-AM est un problème dans les lasers de puissance tels le laser Megajoule (LMJ), car elle peut empêcher la fusion-ignition (S. Hocquet et al., Applied Optics, Vol. 47, N° 18, 06/2008, pp. 3338-3349). Dans le LMJ, la conversion FM-AM provient principalement du système de conversion de fréquence et de focalisation (SCF), qui est un système optique non linéaire. Le LMJ est prévu pour générer des impulsions de très haute énergie (jusqu'à 2 MJ en quelques nanosecondes). Les impulsions du LMJ sont modulées en phase pour élargir leur spectre optique. Idéalement cette modulation est purement une modulation de phase. Toutefois, lors du passage à travers les différents composants optiques de la chaîne laser, le spectre des impulsions n'est pas parfaitement transmis : il est filtré. La modulation FM est partiellement convertie en modulation d'intensité ou AM. Cette modulation AM produit des distorsions de la forme temporelle des impulsions laser.

Le facteur de distorsion $\alpha$, peut atteindre plusieurs dizaines de pourcent (10-40%). La publication Hocquet et al. (Applied Optics, 2008) montre qu'un tripleur de fréquence peut engendrer une distorsion FM-AM de 40%, ce qui est très gênant pour déclencher la fusion-ignition. Il est indispensable de réduire au mieux cette distorsion $\alpha$, en particulier pour éviter d'endommager les composants optiques.

Les lasers impulsionnels à solide ou à fibres optiques trouvent aujourd'hui de très nombreuses applications. Ces lasers utilisent également des systèmes de conversion de fréquence. Même si l'énergie des impulsions n'atteint pas celle du LMJ, les distorsions temporelles sont également gênantes car elles introduisent un élargissement temporel des impulsions de sortie.

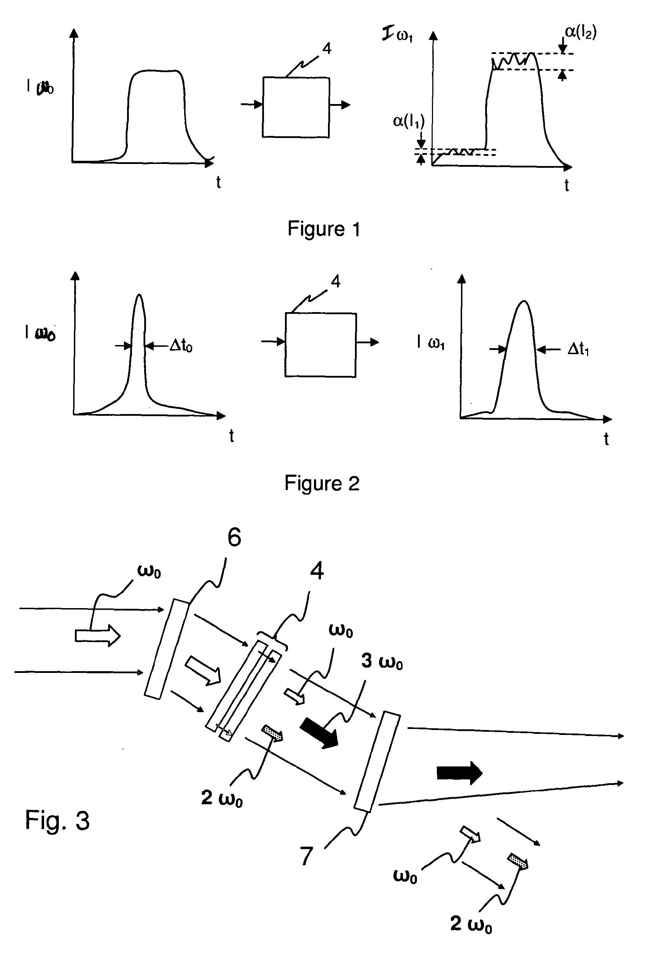

Dans un laser de très forte puissance, comme le laser Megajoule, la première partie de l'impulsion est à relativement faible puissance et la seconde partie (créneau) à très forte puissance. Ainsi, les distorsions ne sont pas les mêmes tout au long de l'impulsion (cf. figure 1).

Dans les lasers à impulsions ultracourtes (picoseconde ou subpicoseconde), de puissance plus faible que le LMJ, les distorsions temporelles se manifestent sous la forme d'un élargissement temporel des impulsions après conversion de fréquence (cf. figure 2).

Il est possible analytiquement d'annuler la conversion FM-AM dans des systèmes linéaires, en introduisant une fonction de transfert inverse. Toutefois, on ne s'attend pas à utiliser ces méthodes dans des systèmes non linéaires, ni à ce qu'elles permettent d'obtenir une compensation aussi bonne que dans des systèmes linéaires.

Seule une compensation non linéaire inverse a la fonction de transfert non linéaire du convertisseur de fréquence serait apte à compenser exactement les distorsions temporelles induites par la conversion de fréquence.

Par ailleurs, les composants optiques placés sur le trajet du faisceau après un convertisseur de fréquence induisent également des distorsions FM-AM, même si leur fonction de transfert est linéaire. Ainsi, le SCF du LMJ comprend un réseau de diffraction disposé avant le convertisseur de fréquence. Ce réseau de diffraction induit une dispersion chromatique qui a pour effet d'introduire une phase accumulée différente sur le spectre du signal, y compris après la conversion de fréquence, et se traduit également par des distorsions sur l'intensité du signal de sortie. Cette distorsion de phase est linéaire après conversion de fréquence, c'est-à-dire qu'elle ne dépend pas de l'intensité du signal. Il est donc théoriquement facile de la compenser après. Cependant, du fait de l'énergie importante du faisceau, cette solution n'est pas envisageable.

Une fonction linéaire de précompensation est elle-même transformée de façon non linéaire par le convertisseur de fréquence. Ainsi, la distorsion spectrale linéaire de la phase après conversion de fréquence doit être vue comme non linéaire si l'on cherche à la précompenser. Or, il est difficile de prévoir l'effet d'une transformation non linéaire sur une fonction linéaire. Il n'est donc pas évident qu'une fonction de transfert linéaire puisse améliorer les distorsions induites par une fonction de transfert non-linéaire.

Un des buts de l'invention est de réduire les distorsions temporelles en intensité de conversion FM-AM dans des impulsions lasers de forte puissance ou de très courte durée issues d'un convertisseur optique non linéaire de fréquence. De manière générale, le dispositif de l'invention s'applique à tout signal dont l'intensité est suffisante pour que le processus de conversion de fréquence soit efficace et dont le spectre est plus large que l'acceptance spectrale de la conversion de fréquence.

L'invention concerne un dispositif de réduction des distorsions temporelles induites dans des impulsions lumineuses par un système convertisseur de fréquence optique, ledit système comprenant au moins un composant optique non linéaire ayant une susceptibilité optique non linéaire $\chi$ d'ordre 2 ou 3, ledit système convertisseur étant apte à recevoir au moins un faisceau lumineux impulsionnel incident, les impulsions lumineuses incidentes étant de durée $\Delta t_0$, de fréquence optique $\omega_0 \pm \Delta\omega_0$ et d'intensité et à générer par conversion de fréquence au moins un faisceau $I\omega_0(t)$ impulsionnel de sortie, les impulsions lumineuses de sortie étant de durée $\Delta t_1$ de fréquence optique $\omega_1 \pm \Delta\omega_1$ différente de $\omega_0 \pm \Delta\omega_0$ et dont l'intensité $I\omega_1(t)$ est fonction de $I\omega_0(t)^\beta$, $\beta$ étant un coefficient de saturation du convertisseur de fréquence. Selon l'invention, ledit dispositif de réduction des distorsions temporelles comprend un filtre temporel linéaire de pré-compensation disposé sur le trajet du faisceau incident de fréquence optique $\omega_0$ et apte à réduire autour d'au moins une intensité de compensation $I_{comp}$ les distorsions temporelles en intensité induites dans lesdites impulsions de sortie converties en fréquence.

L'invention concerne également les différents éléments techniques suivants, qui peuvent être utilisés seuls ou selon toutes les combinaisons techniquement possibles :

- le filtre temporel linéaire de pré-compensation est apte à réduire les distorsions temporelles dans des impulsions lumineuses autour d'une intensité de compensation $I_{comp}$ ;
- le filtre temporel linéaire de pré-compensation est apte à introduire une précompensation en amplitude en fonction de la fréquence optique $f$ de la forme :

$$H_{c\,comp}(f) = 1 + \frac{\gamma_{comp}^{\,2}}{6} f^{\,2} \;,$$

où $\gamma_{comp} = (\omega_1/\omega_0)_- \gamma/\sqrt{\beta}$ ,

étant l'acceptance spectrale du convertisseur de fréquence pour une intensité $I_{comp}$ ;
- le filtre temporel linéaire de pré-compensation est un interféromètre à deux ou à plusieurs ondes ;
- le filtre temporel linéaire de pré-compensation est un interféromètre en espace libre (Michelson ou Fabry-Perot), en couches minces, en optique intégrée (phasar) ou à fibres optiques ;
- le filtre temporel linéaire de pré-compensation est un filtre ayant une fonction de transfert de phase de la forme :

$$H_{d\,comp}(f) = \exp\left[-\frac{i}{2}\,\varphi_{2comp}.f^{\,2}\right] \;,$$

où $\varphi_{2comp} = \varphi_2/\beta$, $\varphi_2$ étant la dispersion chromatique de la fonction de transfert en phase à compenser ;
- le filtre de pré-compensation comprend une fibre à réseau de Bragg chirpé, un phasar, un réseau de diffraction ou une fibre optique dispersive.

L'invention concerne également un système convertisseur de fréquence optique pour générer un faisceau à une fréquence $\omega_1$ multiple de la fréquence $\omega_0$ du faisceau incident et comprenant un dispositif de réduction des distorsions temporelles suivant l'un des modes de réalisation décrits.

L'invention concerne également un système convertisseur de fréquence optique non linéaire pour recevoir deux faisceaux lumineux impulsionnels incidents respectivement de fréquence optique $\omega_0$ et $\omega'_0$ et générer par sommation ou différence de fréquence un faisceau dont la fréquence $\omega_1$ est égale à une combinaison linéaire des fréquences incidentes $\omega_0$ et $\omega'_0$, ledit système comprenant un dispositif de réduction des distorsions temporelles suivant l'un des modes de réalisation décrits.

L'invention concerne également un générateur optique paramétrique comprenant un convertisseur optique non linéaire apte à recevoir un faisceau lumineux impulsionnel incident de fréquence $\omega_0$ et à générer deux faisceaux lumineux impulsionnels de sortie de fréquences optiques respectives $\omega_1$ et $\omega'_1$ et comprenant un dispositif de réduction des distorsions temporelles selon l'un des modes de réalisation décrits.

L'invention concerne un laser à impulsions de forte puissance comprenant un convertisseur de fréquence optique non linéaire et un dispositif selon l'invention apte à réduire les distorsions de conversion FM-AM induites dans des impulsions laser converties en fréquence.

L'invention concerne enfin un laser à impulsions sub-picoseconde comprenant un convertisseur de fréquence et un dispositif selon l'invention pour réduire les distorsions d'élargissement temporel induites dans lesdites impulsions sub-picoseconde par conversion en fréquence.

La présente invention concerne également les caractéristiques qui ressortiront au cours de la description qui va suivre et qui devront être considérées isolément ou selon toutes leurs combinaisons techniquement possibles.

Cette description est donnée à titre d'exemple non limitatif et fera mieux comprendre comment l'invention peut être réalisée en référence aux dessins annexés sur lesquels :

- la figure 1 illustre l'effet des distorsions temporelles (conversion FM-AM) induites par conversion de fréquence sur une impulsion laser de très forte puissance de durée quelques nanosecondes, comme une impulsion du LMJ ;
- la figure 2 illustre l'effet des distorsions temporelles (élargissement de la largeur de l'impulsion) induites par conversion de fréquence sur une impulsion laser ultra brève, comme une impulsion picoseconde ;
- la figure 3 représente un dispositif pour tripler la fréquence optique et focaliser un faisceau du LMJ ;
- la figure 4A illustre les variations de l'acceptance spectrale ($\gamma$) d'un convertisseur optique de fréquence (ex. tripleur de fréquence) en fonction de l'intensité optique du faisceau ; la figure 4B illustre les variations du coefficient $\beta$ d'un convertisseur optique de fréquence (ex. tripleur de fréquence) en fonction de l'intensité optique du faisceau ;
- la figure 5 représente schématiquement un convertisseur optique non linéaire de fréquence ;
- la figure 6 représente schématiquement un dispositif selon l'invention un filtre de précompensation en amplitude des distorsions temporelles en amont d'un système convertisseur optique non linéaire de fréquence ;
- la figure 7 représente schématiquement un signal lumineux de spectre large à l'entrée d'un système de conversion de fréquence non linéaire dont l'acceptance spectrale varie en fonction de l'intensité du signal et les distorsions temporelles du signal induites après conversion de fréquence ;
- la figure 8 représente schématiquement un signal lumineux de spectre large qui est filtré par un filtre linéaire de précompensation en amont du système de conversion de fréquence non linéaire et l'effet de réduction des distorsions temporelles de l'impulsion après conversion de fréquence ;
- la figure 9 représente les variations du coefficient $\alpha$ de distorsion temporelle d'une impulsion de type LMJ pour deux niveaux d'intensité laser en fonction du coefficient de compensation $\gamma_{comp}$ du filtre linéaire de précompensation en amplitude ;
- la figure 10 représente schématiquement un convertisseur optique non linéaire de fréquence suivi d'un système introduisant des distorsions non linéaires de la phase du signal converti en fréquence ;
- la figure 11 représente schématiquement un dispositif selon l'invention comprenant un filtre de précompensation en phase et un filtre de précompensation en amplitude en amont d'un système convertisseur optique non linéaire de fréquence ;
- la figure 12 représente les variations du coefficient $\alpha$ de distorsion temporelle d'une impulsion de type LMJ pour deux niveaux d'intensité laser en fonction du coefficient de compensation en phase $\varphi_{2comp}$ du filtre linéaire de précompensation.

Nous allons décrire une application de l'invention dans un système convertisseur de fréquence pour laser de très haute puissance et en particulier le LMJ. Nous utiliserons dans la suite l'exemple du LMJ mais l'invention s'applique aussi à la conversion de fréquence d'impulsions courtes, typiquement sub-picoseconde, ou d'une manière générale à la conversion de fréquence de tout signal dont l'intensité est suffisante pour que le processus de conversion de fréquence soit efficace et dont le spectre est plus large que l'acceptance spectrale de la conversion de fréquence.

La figure 3 représente schématiquement un dispositif SCF pour tripler la fréquence optique et focaliser un faisceau du LMJ. Ce dispositif comprend un premier réseau de diffraction 6 qui reçoit des impulsions à la fréquence optique $\omega_0$. Un convertisseur de fréquence 4 comprend deux cristaux non linéaires. Le premier cristal génère par doublage de fréquence un faisceau à la fréquence $\omega_0$ et un faisceau à la fréquence $2.\omega_0$. Le second cristal effectue la somme des fréquences $\omega_0$ et $2.\omega_0$ pour générer des impulsions à la fréquence $3.\omega_0$. Un second réseau de diffraction 7 permet de filtrer l'énergie résiduelle aux fréquences $\omega_0$ et $2.\omega_0$ et de focaliser le faisceau à la fréquence triple ($3.\omega_0$) sur la cible du LMJ.

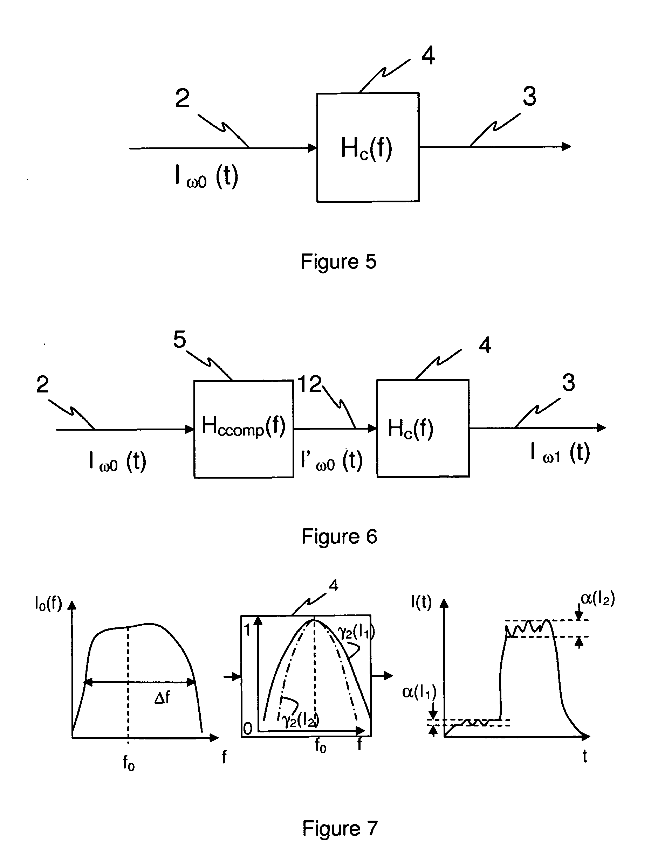

La figure 5 représente schématiquement la fonction de transfert d'un convertisseur de fréquence optique non linéaire. Le convertisseur 4 comprend un cristal non linéaire qui reçoit un faisceau lumineux impulsionnel incident 2, dont les impulsions lumineuses incidentes sont de durée $\Delta t_0$, de l'ordre de quelques nanosecondes, de fréquence optique $\omega_0 \pm \Delta\omega_0$ et d'intensité $I\omega_0(t)$. En sortie du convertisseur émerge un faisceau impulsionnel de sortie 3, les impulsions lumineuses de sortie étant de durée $\Delta t_1$, de fréquence optique $\omega_1 \pm \Delta\omega_1$ et d'intensité $I\omega_1(t)$. Ce faisceau 3 comprend des distorsions temporelles induites notamment par conversion FM-AM non linéaire (cf. figure 1).

La fonction de transfert d'un convertisseur de fréquence $H_c(f)$ est par essence une transformation non linéaire mais le dispositif de l'invention permet de réduire sensiblement les distorsions temporelles dues à une acceptance spectrale réduite du convertisseur 4 par une précompensation linéaire judicieusement choisie, dont la forme en phase et en intensité est approximativement égale à l'inverse de la fonction de transfert équivalente du processus de conversion de fréquence à une intensité donnée.

La figure 6 représente schématiquement la fonction d'un dispositif selon l'invention de réduction des distorsions temporelles introduites par un convertisseur de fréquence. Ce dispositif de réduction des distorsions temporelles comprend un filtre linéaire temporel 5 de précompensation. Le convertisseur de fréquence comprend un cristal non linéaire 4. Le filtre linéaire 5 reçoit un faisceau lumineux impulsionnel incident 2, d'impulsions à la fréquence optique $\omega_0$, d'intensité $I\omega_0(t)$ et transmet un faisceau 12 d'impulsions à la fréquence optique $\omega_0$ inchangée d'intensité $I'\omega_0(t)$. En sortie du convertisseur émerge un faisceau 3 d'impulsions à la fréquence optique $\omega_1$ d'intensité $I\omega_1(t)$ corrigé des distorsions temporelles induites par l'acceptance spectrale de la conversion de fréquence non linéaire.

Les distorsions de conversion FM-AM du signal de sortie ici considérées sont des distorsions en intensité résultant de variations d'amplitude ou de phase du signal. Le signal de sortie peut comprendre à la fois des distorsions spectrales en amplitude et en phase.

Nous allons tout d'abord considérer des distorsions spectrales en amplitude puis des distorsions spectrales en phase.

Pour le LMJ, les distorsions temporelles en intensité des impulsions mégajoule sont caractérisées par un coefficient noté $\alpha$ qui quantifie les distorsions temporelles d'un signal initialement modulé en phase et qui, du fait de distorsions FM-AM, se trouve modulé en intensité (cf. figure 1) :

$$\alpha = 2.\frac{I_{\max} - I_{\min}}{I_{\max} + I_{\min}}$$

$\alpha$ varie entre 0 et 200%. Idéalement, $\alpha=0$ (pas de distorsions).

La conversion de fréquence (triplement de fréquence dans le cas du LMJ) est assimilée à un filtre $H_c$ défini à $3\omega$ par la fonction :

$$H_c(f) = sinc(\gamma f) \approx 1 - \frac{\gamma^2}{6}f^2,$$

où f représente la fréquence optique, et $\gamma$ une variable liée à l'acceptance spectrale du convertisseur optique de fréquence : plus $\gamma$ est élevé, plus l'acceptance spectrale est faible.

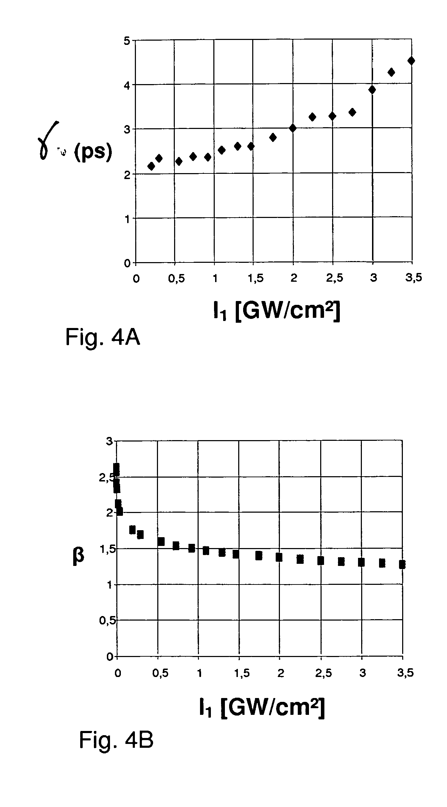

Il est connu que $\gamma$ varie en fonction de l'intensité : $\gamma$ augmente avec une intensité incidente croissante, et l'acceptance spectrale se réduit (cf. Fig. 4A).

La figure 7 représente schématiquement l'effet d'un convertisseur de fréquence non linéaire sur un signal lumineux de spectre large. Le signal lumineux d'entrée a un spectre centré sur la fréquence optique fo et une largeur spectrale supérieure à l'acceptance spectrale déterminée par $\gamma$ du convertisseur de fréquence, cette acceptance spectrale diminuant avec l'intensité du signal. Le signal lumineux de sortie représenté schématiquement en fonction du temps présente des distorsions en amplitude $\alpha$ importantes et qui dépendent du niveau d'intensité.

De plus, du fait du processus de conversion, l'intensité varie selon la loi :

$$I_{3\omega} \propto I_{1\omega}^{\beta}$$

où $\beta$ est un coefficient de saturation du convertisseur de fréquence.

Dans le cas du triplement de fréquence, $\beta$ est théoriquement égal à 3 à faible intensité. Toutefois, la mesure montre que $\beta$ n'est pas constant et décroît en fonction de l'intensité croissante à cause de la « saturation » due à la déplétion de l'onde incidente (figure 4B).

L'invention consiste à compenser pour partie la fonction de transfert non-linéaire de la conversion de fréquence par une fonction de transfert linéaire du dispositif de réduction des distorsions. Le dispositif de réduction des distorsions étant linéaire, il est donc très simple à réaliser, comme détaillé plus loin.

Une fonction de transfert linéaire de précompensation esi l'inverse de la fonction de transfert de la conversion de fréquence, et est définie par la fonction :

$$H_{c\,comp}(f) = 1 + \frac{\gamma_{comp}^2}{6}f^2,$$

où $\gamma_{comp}$ est un coefficient de compensation fixe (indépendant de l'intensité).

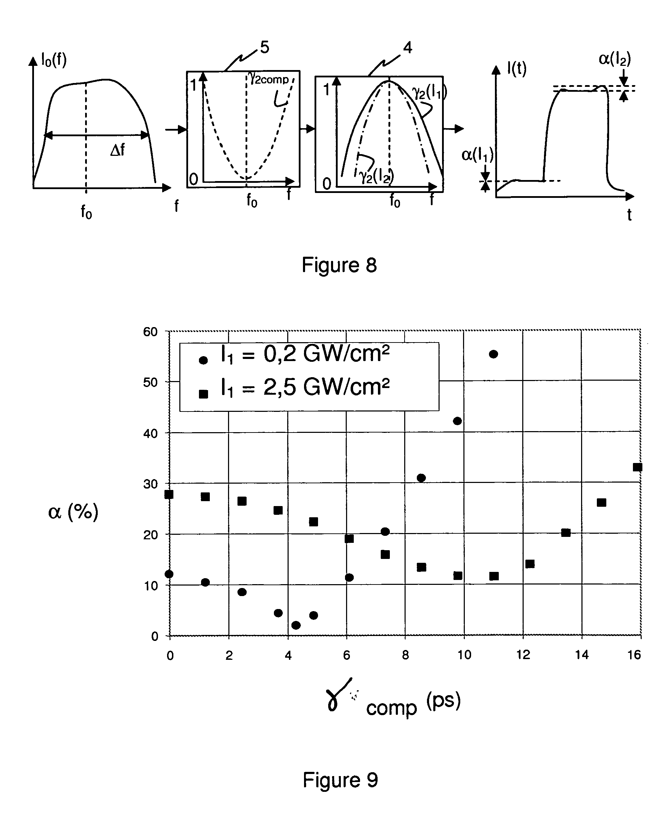

La fonction $H_{ccomp}$ est donc bien une fonction linéaire par rapport à l'intensité. La figure 8 représente schématiquement l'effet du filtre linéaire de précompensation en amplitude sur un signal lumineux ayant un spectre en fréquence large. Le signal lumineux traverse un filtre de précompensation 5 dont le spectre est de la forme indiquée ci-dessus avant d'atteindre le convertisseur de fréquence 4. Le signal lumineux de sortie représenté schématiquement en fonction du temps présente des distorsions en amplitude $\alpha$ réduites comparées à un dispositif de conversion de fréquence dépourvu d'un filtre linéaire en intensité 5.

Le choix de la valeur de $\gamma_{comp}$ doit être adapté en fonction de l'application.

Les résultats de cette précompensation en amplitude sont illustrés sur la figure 9. Lorsque $\gamma_{comp}$ est nul, il n'y a pas de compensation : $\alpha$ est respectivement supérieur à 10% pour un faisceau de 0,2 GW/cm$^2$, et supérieur à 30% pour un faisceau de 2,5 GW/cm$^2$. Cette modulation AM du faisceau est donc non négligeable. Les variations de $\alpha$ en fonction de $\gamma_{comp}$, sont tout d'abord décroissantes, jusqu'à atteindre une valeur minimale puis augmentent à nouveau. On observe en suivant les variations de $\alpha$ représentées sur la figure 9, que l'introduction d'une compensation $\gamma_{comp}$ permet de réduire la valeur de $\alpha$, le facteur de modulation AM-FM, aux deux niveaux d'intensité illustrés. Pour chaque valeur d'intensité de faisceau, il existe une valeur de $\gamma_{comp}$ ($\gamma_{comp}$ - 4ps à 0,2 GW/cm$^2$, et $\gamma_{comp}$ ~ 10ps à 2,5 GW/cm$^2$) qui permet de minimiser le coefficient $\alpha$. Pour une intensité de 0,2 GW/cm$^2$ il est possible de quasiment annuler $\alpha$. Il est aussi possible de minimiser $\alpha$ sur une gamme d'intensité de faisceau.

Selon un mode de réalisation préféré, la valeur optimale pour une intensité donnée (i.e. correspondant à une valeur connue de $\gamma$) de $\gamma_{comp}$ est environ égale à $3/\sqrt{\beta}$. Le facteur 3 est dû au triplement de fréquence (il serait égal à 2 pour du doublement de fréquence). Le facteur $\beta$ est dû à la saturation.

De manière générale, pour une conversion de fréquence $\omega_0$ en $\omega_1$, la valeur optimale de précompensation en amplitude est égale à :

$$\gamma_{comp}=(\omega_1/\omega_0).\ \gamma\ /\sqrt{\beta}$$

Lorsque le signal à convertir est d'intensité variable, on peut choisir l'intensité pour laquelle on souhaite une compensation optimale. Aux autres intensités, la compensation sera imparfaite mais une amélioration reste possible.

Un dispositif de précompensation ayant une fonction de transfert linéaire en intensité peut être réalisé de différentes manières. Pour un filtre en amplitude, les modes de réalisation envisagés utilisent un filtre interférentiel à deux ou plusieurs ondes, comme par exemple :

- un interféromètre de Michelson ou Fabry-Perot en espace libre,
- un interféromètre en couches minces,
- un interféromètre en optique intégrée (phasars),
- un interféromètre à fibre optique (fibre à maintien de polarisation ou non).

L'ajustement de la différence marche entre les voies de l'interféromètre permet d'obtenir la valeur souhaitée de $\gamma_{comp}$.

Selon le mode de réalisation préféré, on utilise un interféromètre à deux ondes qui fonctionne pour un signal polarisé linéairement. Cet interféromètre à deux ondes comprend une lame demi-onde, une fibre optique à maintien de polarisation et un polariseur. Un tel interféromètre introduit un filtre linéaire temporel.

Le filtre linéaire de l'invention est placé en amont du cristal non linéaire convertisseur de fréquence sur le trajet optique du faisceau lumineux impulsionnel incident de manière à introduire une précompensation.

Grâce à une précompensation temporelle linéaire, il est aussi possible de compenser avant conversion de fréquence par une fonction de transfert linéaire, tout ou partie d'une fonction de transfert linéaire (ou non) ayant lieu après la conversion de fréquence. Une fonction de transfert linéaire après conversion de fréquence doit être vue avant conversion de fréquence comme une fonction de transfert non-linéaire. En effet, la précompensation consiste à pré distordre un signal de façon inverse de la fonction de transfert qui lui succède. Dans le cas où une fonction de conversion de fréquence vient s'intercaler entre les deux, les pré distorsions sont modifiées non linéairement par la conversion de fréquence.

Nous allons maintenant considérer la compensation de distorsions en phase d'un signal converti en fréquence.

Dans le cas du LMJ, on utilise un réseau de diffraction 6 placé avant le convertisseur de fréquence 4. Le réseau 6 introduit naturellement un effet de dispersion chromatique dans le spectre du signal avant et après conversion de fréquence. Cette dispersion chromatique se traduit en une phase accumulée variable sur le spectre du signal à 3$\omega$. Or cette variation de la phase après triplement de fréquence varie non linéairement sur le spectre (autrement dit en fonction de la fréquence optique) selon l'approximation polynomiale suivante :

$$\varphi(f) = \varphi_0 + \varphi_1 f + \frac{1}{2}\varphi_2 f^2 + o[f^2]$$

sont :

$$H_d^{\varphi}(f) \approx \exp\left[\frac{i}{2}\varphi_2.f^2\right]$$

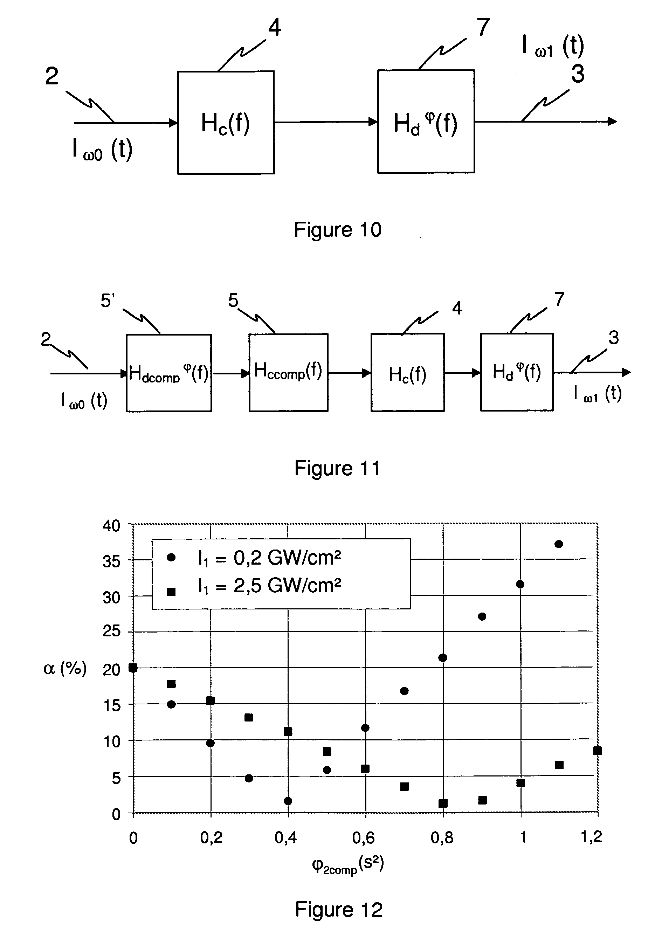

car $\varphi_0$ et $\varphi_1$ n'apportent aucune distorsion. Ainsi, sur la figure 12, on n'a pas intégré la compensation de la dispersion chromatique avant la conversion de fréquence à $\omega_0$ qui est un phénomène linéaire et que l'on sait parfaitement compenser. $H_d^{\varphi}$ est la fonction de transfert de phase à travers le système convertisseur de fréquence suivi d'un réseau de dispersion. Ces variations non linéaires de phase produisent également une distorsion temporelle $\alpha$ de l'intensité du signal.

La fonction de transfert du système convertisseur de fréquence est schématiquement représentée sur la figure 10. Le système convertisseur de fréquence comprend au moins un cristal non linéaire 4 convertisseur de fréquence, dont la fonction de transfert est $H_c(f)$ et un composant optique 7 dont la fonction de transfert introduit un déphasage $H_d^{\varphi}(f)$.

La figure 11 représente schématiquement la fonction de transfert d'un dispositif de précompensation linéaire selon l'invention, comprenant un filtre linéaire 5 de précompensation en amplitude $H_{d\ comp}(f)$ et un filtre 5' de précompensation en phase $H_{d\ comp}^{\varphi}(f)$. Les deux filtres 5 et 5' étant linéaires, ils peuvent être intervertis.

Selon l'invention, en pré compensant par une fonction de phase de la forme :

$$H_{d\ comp}(f) = \exp\left[-\frac{i}{2}\varphi_{2comp}.f^2\right]$$

on obtient les variations de $\alpha$ en fonction du coefficient de compensation en phase $\varphi_{2comp}$ du filtre linéaire de précompensation représentés sur la figure 12 pour deux valeurs d'intensité de faisceaux (respectivement 0,2 GW/cm$^2$ et 2,5GW/cm$^2$).

L'origine des abcisses (i.e. lorsque $\varphi_{2comp}$ est nul) de la figure 12 correspond au cas non compensé : $\alpha$ est de l'ordre de 20% quelle que soit l'intensité du faisceau. On observe en suivant les variations de $\alpha$ sur la figure 12, que l'introduction d'une compensation $\varphi_{2comp}$ permet de réduire les valeurs $\alpha$, le facteur de modulation AM-FM, aux deux niveaux d'intensité représentés. Pour chaque valeur d'intensité de faisceau, il existe une valeur de $\varphi_{2comp}$ qui permet de minimiser le coefficient $\alpha$. Pour une intensité de 0,2 GW/cm$^2$ il est possible d'annuler $\alpha$. Il est aussi possible de minimiser $\alpha$ sur une gamme d'intensité de faisceau.

Là encore $\varphi_2$ et la valeur optimale de $\varphi_{2comp}$ à une intensité donnée sont liés. Une relation approchée entre $\varphi_{2comp}$ et $\varphi_2$ est donnée par :

$$\varphi_{2comp} = \varphi_2/\beta$$

La compensation n'est pas parfaite car elle dépend de l'intensité du signal. Toutefois, il existe une valeur de $\varphi_{2comp}$ où $\alpha$ est minimum, pour chaque intensité. Selon différents modes de réalisation de l'invention, il est possible d'optimiser la compensation, soit à une intensité, soit sur une gamme d'intensités.

Pour une fonction de transfert en phase, le mode de réalisation préféré utilise une fibre dispersive ayant une longueur et une dispersion chromatiques adaptées au retard de phase que l'on souhaite introduire avant la conversion de fréquence. On peut aussi utiliser un réseau de Bragg chirpé, un phasar ou des réseaux de diffraction.

Dans le cas du LMJ, les distorsions temporelles du signal proviennent à la fois de la fonction de transfert en intensité $H_c$ et de la fonction de transfert en phase $H_d^{\varphi}$. Il est possible de placer un filtre linéaire de précompensation en phase et un filtre linéire de précompensation en amplitude en amont du convertisseur de fréquence. Les deux filtres étant linéaires leur place est interchangeable.

Le ou les filtre(s) linéaire(s) temporel(s) de l'invention est placé en amont du cristal non linéaire convertisseur de fréquence sur le trajet optique du faisceau lumineux impulsionnel incident pour introduire une précompensation avant la fonction de transfert non linéaire de conversion de fréquence.

L'invention permet de réduire les distorsions temporelles en intensité d'impulsions lasers converties en fréquence, de très forte puissance ou de très courte durée.

L'invention permet ainsi de compenser en partie la fonction de transfert non-linéaire de la conversion de fréquence par une fonction de transfert linéaire, et est relativement simple à réaliser. A noter que la compensation n'est pas parfaite et doit être adaptée au niveau d'intensité. Si l'intensité du signal varie au cours du temps (ce qui est le cas le plus fréquent), il convient de choisir l'intensité pour laquelle on souhaite avoir la meilleure compensation. Ainsi dans le laser Megajoule, il est possible de choisir de compenser les distorsions plutôt dans la partie basse intensité de l'impulsion, ou plutôt dans la partie haute intensité de l'impulsion.

L'invention permet de déterminer le type de filtre (en amplitude et/ou en phase) à placer en amont du convertisseur de fréquence. L'invention permet également de prévoir la fonction de filtrage (valeur du déphasage ou de la modulation d'intensité) à introduire pour précompenser efficacement les distorsions non linéaires. Les fonctions de ces filtres ne découlent pas directement des valeurs à compenser, mais dépendent du coefficient $\beta$ de saturation du convertisseur de fréquence.

De même, pour des impulsions de très courte durée, la compensation dépend de l'intensité de l'impulsion : la correction de l'élargissement temporel des impulsions peut être optimisée pour des impulsions d'intensité donnée.

L'acceptance spectrale effective du système optique convertisseur de fréquence est ainsi améliorée pour une intensité donnée.

**Revendications**

1. Dispositif de réduction des distorsions temporelles induites dans des impulsions lumineuses par un système convertisseur de fréquence optique, ledit système comprenant au moins un composant optique non linéaire (4) ayant une susceptibilité optique non linéaire $\chi$ d'ordre 2 ou d'ordre 3, ledit système convertisseur étant apte à recevoir au moins un faisceau lumineux impulsionnel incident (2), les impulsions lumineuses incidentes étant de durée $\Delta t_0$, de fréquence optique $\omega_0 \pm \Delta\omega_0$ et d'intensité $I\omega_0(t)$ et à générer par conversion de fréquence au moins un faisceau impulsionnel de sortie (3), les impulsions lumineuses de sortie étant de durée $\Delta t_1$ de fréquence optique $\omega_1 \pm \Delta\omega_1$ différente de $\omega_0 \pm \Delta\omega_0$ et dont l'intensité $I\omega_1(t)$ est fonction de $I\omega_0(t)^\beta$, $\beta$ étant un coefficient de saturation du convertisseur de fréquence,
   **caractérisé en ce que** ledit dispositif comprend :

   un filtre temporel linéaire (5) de pré-compensation en amplitude disposé sur le trajet du faisceau incident (2) et apte à introduire une précompensation en amplitude en fonction de la fréquence optique f de la forme :

$$H_{c\,comp}(f) = 1 + \frac{\gamma_{comp}^{\ 2}}{6} f^2$$

   où $\gamma_{comp} = (\omega_1/\omega_0).\gamma/\sqrt{\beta}$,
   étant l'acceptance spectrale du convertisseur de fréquence pour une intensité de compensation $I_{comp}$, de manière à réduire pour au moins une intensité de compensation $I_{comp}$, les distorsions temporelles en intensité induites dans lesdites impulsions lumineuses de sortie converties en fréquence.

2. Dispositif selon la revendication 1, **caractérisé en ce que** le filtre temporel linéaire (5) de pré-compensation en amplitude est apte à réduire les distorsions temporelles dans des impulsions lumineuses pour une intensité de compensation $I_{comp}$.

3. Dispositif selon l'une des revendication 1 à 2, **caractérisé en ce que** ledit filtre de pré-compensation en amplitude (5) est un interféromètre à deux ou à plusieurs ondes en espace libre de type Michelson ou Fabry-Perot, en couches minces, en optique intégrée phasar ou à fibres optiques.

4. Dispositif selon l'une des revendications 1 à 3, **caractérisé en ce qu'**il comprend en outre un filtre temporel linéaire de pré-compensation en phase (5') ayant une fonction de transfert en phase de la forme :

$$H_{d\,comp}(f) = \exp\left[-\frac{i}{2}\,\varphi_{2comp}\cdot f^2\right]\,,$$

où $\varphi_{2comp} = \varphi_2/\beta$, $\varphi_2$ étant la dispersion chromatique de la fonction de transfert en phase à compenser.

**5.** Dispositif selon la revendications 4 **caractérisé en ce que** ledit filtre de pré-compensation en phase (5') comprend un filtre choisi parmi les suivants : une fibre à réseau de Bragg chirpé, un phasar, des réseaux de diffraction et une fibre optique dispersive.

**6.** Système convertisseur de fréquence optique non linéaire pour générer un faisceau de sortie à une fréquence $\omega_1$ multiple de la fréquence $\omega_0$ du faisceau incident **caractérisé en ce qu'**il comprend un dispositif de réduction des distorsions temporelles selon l'une des revendications 1 à 5.

**7.** Système convertisseur de fréquence optique non linéaire par sommation de fréquence apte à recevoir deux faisceaux lumineux impulsionnels incidents (2, 2') respectivement de fréquence optique $\omega_0$ et $\omega'_0$ et à générer par sommation de fréquence un faisceau de sortie dont la fréquence $\omega_1$ est égale à une combinaison linéaire des fréquences incidentes $\omega_0$ et $\omega'_0$, ledit convertisseur étant **caractérisé en ce qu'**il comprend un dispositif de réduction des distorsions temporelles selon l'une des revendications 1 à 5.

**8.** Générateur optique paramétrique amélioré comprenant un convertisseur optique non linéaire apte à recevoir un faisceau lumineux impulsionnel incident (2) de fréquence $\omega_0$ et à générer deux faisceaux lumineux impulsionnels de sortie de fréquences optiques respectives $\omega_1$ et $\omega'_1$ et **caractérisé en ce qu'**il comprend un dispositif de réduction des distorsions temporelles selon l'une des revendications 1 à 5.

**9.** Laser à impulsions de forte puissance comprenant un convertisseur de fréquence optique non linéaire et **caractérisé en ce qu'**il comprend un dispositif de réduction des distorsions temporelles induites dans des impulsions lumineuses par un système convertisseur de fréquence optique selon l'une des revendications 1 à 5, ledit dispositif étant apte à réduire les distorsions de conversion FM-AM induites dans des impulsions laser converties en fréquence.

**10.** Laser à impulsions sub-picoseconde comprenant un convertisseur de fréquence et **caractérisé en ce qu'**il comprend un dispositif de réduction des distorsions temporelles induites dans des impulsions lumineuses par un système convertisseur de fréquence optique selon l'une des revendications 1 à 5, ledit dispositif étant apte à réduire les distorsions d'élargissement temporel induites dans lesdites impulsions sub-picoseconde par conversion en fréquence.

## Claims

**1.** A device for reducing the temporal distortions induced in light pulses by an optical frequency converter system, said system comprising at least one nonlinear optical component (4) having a second-order or third-order nonlinear optical susceptibility $\chi$, said converter system being capable of receiving at least one incident pulsed light beam (2), the incident light pulses having a duration $\Delta t_0$, an optical frequency $\omega_0 \pm \Delta\omega_0$ and an intensity $I\omega_0(t)$, and of generating, by frequency conversion, at least one output pulsed beam (3), the output light pulses having a duration $\Delta t_1$, an optical frequency $\omega_1 \pm \Delta\omega_1$ different from $\omega_0 \pm \Delta\omega_0$, and an intensity $I\omega_1(t)$ that is a function of $(I\omega_0(t))^\beta$, $\beta$ being a coefficient of saturation of the frequency converter,
**characterized in that** said device comprises :

   a linear temporal filter (5) for amplitude pre-compensation arranged in the path of the incident beam (2) and capable of introducing an amplitude pre-compensation as a function of the optical frequency $f$ of the form:

$$H_{c\,comp}(f) = 1 + \frac{\gamma_{comp}^2}{6} f^2$$

where $\gamma_{comp} = (\omega_1/\omega_0).\gamma/\sqrt{\beta}$,

$\gamma$ being the spectral acceptance of the frequency converter for a compensation intensity $I_{comp}$, so as to reduce, for at least one compensation intensity $I_{comp}$, the intensity temporal distortions induced in said frequency-converted output light pulses.

2. A device according to claim 1, **characterized in that** the linear temporal filter (5) for amplitude pre-compensation is capable of reducing the temporal distortions in the light pulses for one compensation intensity $I_{comp}$.

3. A device according to one of claims 1 to 2, **characterized in that** said amplitude pre-compensation filter (5) is a free space interferometer with two waves or more, of the type Michelson or Fabry-Perot, thin-film, integrated optics, phasar or optical fibers.

4. A device according to one of claims 1 to 3, **characterized in that** it further comprises a linear temporal filter (5') for phase pre-compensation having a phase transfer function of the form:

$$H_{d\,comp}(f) = \exp\left[-\frac{i}{2}\,\varphi_{2comp}.f^2\right],$$

where $\varphi_{2comp}= \varphi_2/\beta$, $\varphi_2$ being the chromatic dispersion of the phase transfer function to be compensated.

5. A device according to claim 4, **characterized in that** said phase pre-compensation filter (5') comprises a filter chosen from the following : a chirped fiber Bragg grating, a phasar, diffraction gratings and a dispersive optical fiber.

6. A nonlinear optical frequency converter system for generating an output beam at a frequency $\omega_1$ that is a multiple of the frequency $\omega_0$ of the incident beam, **characterized in that** it comprises a device for reducing the temporal distortions according to one of claims 1 to 5.

7. A nonlinear optical frequency converter system by sum frequency capable of receiving two incident pulsed light beams (2, 2') of optical frequency $\omega_0$ and $\omega'_0$, respectively, and of generating by sum frequency an output beam whose frequency $\omega_1$ is equal to a linear combination of the incident frequencies $\omega_0$ and $\omega'_0$, said converter being **characterized in that** it comprises a device for reducing the temporal distortions according to one of claims 1 to 5.

8. A parametric optical generator comprising a nonlinear optical converter capable of receiving an incident pulsed light beam (2) of frequency $\omega_0$ and of generating two output pulsed light beams of optical frequencies $\omega_1$ and $\omega'_1$, respectively, and **characterized in that** it comprises a device for reducing the temporal distortions according to one of claims 1 to 5.

9. A high-power pulsed laser comprising a nonlinear optical frequency converter and **characterized in that** it comprises a device for reducing the induced temporal distortions according to one of claims 1 to 5, capable of reducing the distortions of FM-AM conversion induced in the frequency-converted laser pulses.

10. A sub-picosecond pulsed laser comprising a frequency converter and **characterized in that** it comprises a device for reducing the induced temporal distortions according to one of claims 1 to 5, capable of reducing the distortions of temporal stretching induced in said sub-picosecond pulses by frequency conversion.

**Patentansprüche**

1. Einrichtung zur Verringerung der in Lichtimpulsen durch ein optisches Frequenzumsetzersystem erzeugten Zeitverzerrungen, wobei das System mindestens ein nichtlineares optisches Bauelement (4) umfasst, das eine nichtlineare optische Suszeptibilität $\chi$ zweiter oder dritter Ordnung aufweist, wobei das Umsetzersystem geeignet ist, mindestens einen einfallenden Impulslichtstrohl (2) zu empfangen, wobei die einfallenden Lichtimpulse eine Dauer $\Delta t_0$, eine optische Frequenz $\omega_0 \pm \Delta\omega t_0$ und eine Stärke $I\omega_0(t)$ aurweisen, und durch Frequenzumsetzung mindestens einen Ausgangsimpulsstrahl (3) zu erzeugen, wobei die Ausgangslichfiimpulse eine Dauer $\Delta t_1$ und eine optische Frequenz $\omega_1 \pm \Delta\omega_1$ aufweisen, die sich von $\omega_0 \pm \Delta\omega_0$ unterscheidet und deren Stärke $I\omega_1(t)$ eine Funktion von ($I\omega_0$

$(t))^\beta$ ist, wobei β ein Sättigungskoeffizient des Frequenzumsetzers ist,
**dadurch gekennzeichnet, dass** die Einrichtung Folgendes umfasst:

einen linearen Zeitfilter (5) zur Amplitudenvorkompensation, der auf dem Weg des einfallenden Strahls (2) angeordnet ist und geeignet ist, in Abhängigkeit von der optischen Frequenz f eine Amplitudenvarkampensation mit der folgenden Form einzuführen:

$$H_{c\,comp}(f) = 1 + \frac{\gamma_{comp}^2}{6}\,f^2$$

wobei $\gamma_{comp} = \left(\frac{\omega_1}{\omega_0}\right) \cdot \gamma / \sqrt{\beta},$

wobei γ die spektrale Akzeptanz des Frequenzumsetzers für eine Kompensationsstärke $I_{comp}$ ist, derart, dass für mindestens eine Kompensationsstärke $I_{comp}$ die Stärke der in den frequenzumgesetzten Ausgangslichtimpulsen erzeugten Zeitverzerrungen verringert wird.

2. Einrichtung nach Anspruch 1, **dadurch gekennzeichnet, dass** der lineare Amplitudenvorkompensationszeitfilter (5) geeignet ist, die Zeitverzerrungen in den Lichtimpulsen für eine Kompensationsstörke $I_{comp}$ zu verringern.

3. Einrichtung nach einem der Ansprüche 1 bis 2, **dadurch gekennzeichnet, dass** der Amplitudenvorkompensationsfilter (5) ein Interferometer mit zwei oder mehreren Freiraumwellen des Typs Michelson oder Fabry-Perot, ein Dünnschicht-Interferometer, mit integrierter Optik, Phasar, oder ein Glasfaser-Interferometer ist.

4. Einrichtung nach einem der Ansprüche 1 bis 3, **dadurch gekennzeichnet, dass** sie ferner einen linearen Phasenvorkompensationszeitfilter (5') umfasst, der eine Phasenübertragungsfunktion mit der folgenden Form aufweist:

$$H_{d\,comp}(f) = exp\left[-\frac{i}{2}\,\varphi_{2comp} \cdot f^2\right],$$

wobei $\varphi_{2comp} = \frac{\varphi_2}{\beta}$, wobei $\varphi_2$ die chromatische Dispersion der zu kompensierenden Phasenübertragungsfunktion ist.

5. Einrichtung nach Anspruch 4, **dadurch gekennzeichnet, dass** der Phasenkompensationsfilter (5') einen Filter umfasst, der unter Folgendem ausgewählt ist: einer Faser mit gechirptem Bragg-Beugungsgitter, einem Phasar, Beugungsgittern und einer dispersiven optischen Faser.

6. Nichtlineares optisches Frequenzumsetzersystem zum Erzeugen eines Ausgangsstrahls mit einer Frequenz $\omega_1$, die ein Vielfaches der Frequenz $\omega_0$ des einfallenden Strahls ist, **dadurch gekennzeichnet, dass** es eine Einrichtung zur Verringerung der Zeitverzerrungen nach einem der Ansprüche 1 bis 5 umfasst.

7. Nichtlineares optisches System zur Frequenzumsetzung durch Frequenzsummation, das geeignet ist, zwei eintreffende Impulslichtstrahlen (2, 2') mit der optischen Frequenz $\omega_0$ beziehungsweise $\omega'_0$ zu empfangen und durch Frequenzsummation einen Ausgangsstrahl zu erzeugen, dessen Frequenz $\omega_1$ gleich einer Linearkombination der eintreffenden Frequenzen $\omega_0$ und $\omega'_0$ ist, wobei der Umsetzer **dadurch gekennzeichnet ist, dass** er eine Einrichtung zur Verringerung der Zeitverzerrungen nach einem der Ansprüche 1 bis 5 umfasst.

8. Verbesserter optisch parametrischer Generator, der einen nichtlinearen optischen Umsetzer umfasst, der geeignet ist, einen eintreffenden Impulslichtsfirahf (2) mit der Frequenz $\omega_0$ zu empfangen und zwei Ausgangsimpulslichtstrahlen mit optischen Frequenzen $\omega_1$ beziehungsweise $\omega'_1$ zu erzeugen und **dadurch gekennzeichnet, dass** er eine Einrichtung zur Verringerung der Zeitverzerrungen nach einem der Ansprüche 1 bis 5 umfasst.

9. Hochleistungsimpulslaser, der einen nichtlinearen optischen Frequenzumsetzer umfasst, und **dadurch gekenn-**

**zeichnet, dass** er eine Einrichtung zur Verringerung der durch ein optisches Frequenzumsetzersystem in Lichtimpulsen erzeugten Zeüverzerrungen nach einem der Ansprüche 1 bis 5 umfasst, wobei die Einrichtung geeignet ist, die in den frequenzumgesetzten Laserimpuisen erzeugten FM-AM-Umsetzungsvercerrungen zu verringern.

10. Laser mit Sub-Pikosekundenimpulsen, der einen Frequenzumsetzer umfasst, und **dadurch gekennzeichnet, dass** er eine Einrichtung zur Verringerung der durch ein optisches Frequenzumsetzersystem in Lichtimpulsen erzeugten Zeitverzerrungen nach einem der Ansprüche 1 bis 5 umfasst, wobei die Einrichtung geeignet ist, die in den Sub-Pikosekundenimpulsen durch Frequenzumsetzung erzeugten Verzerrungen durch zeitliche Verbreiterung zu verringern.

Figure 1

Figure 2

Fig. 3

Fig. 4A

Fig. 4B

Figure 5

Figure 6

Figure 7

Figure 8

Figure 9

Figure 10

Figure 11

Figure 12

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **S. HOCQUET et al.** *Applied Optics,* Juin 2008, vol. 47 (18), 3338-3349

- **HOCQUET et al.** *Applied Optics,* 2008